# FASCICULE DE BREVET EUROPEEN

(11) **EP 0 936 360 B1**
(45) Date de publication et mention de la délivrance du brevet: **05.10.2005**
(21) Numéro de dépôt: 99440025.7
(22) Date de dépôt: 05.02.1999
(51) Int. Cl.: E04F 11/18, F16B 7/04

(54) **Dispositif d'assemblage, en particulier pour éléments tubulaires**
Zusammenbauvorrichtung, insbesondere für rohrförmige Elemente
Assembling device, in particular for tubular elements

(30) Priorité: 11.02.1998 FR 9801803
(43) Date de publication de la demande: 18.08.1999
(73) Titulaire: Grande Forge Management S.A., 67100 Strasbourg (FR)
(72) Inventeur: Schutt, Jean-Louis, 67400 Illkirch Graffenstaden (FR)
(74) Mandataire: Nuss, Pierre

(56) Documents cités:
- DE-A- 4 336 282
- GB-A- 2 149 047
- US-A- 4 150 907
- US-A- 4 867 596

## Description

La présente invention concerne le domaine de la fabrication industrielle de pièces de ferronnerie, notamment pour garde-corps, balustrades et analogues, et a pour objet un dispositif d'assemblage, en particulier pour éléments creux de garde-corps ou analogue.

Les lisses, sous-lisses, barreaux et poteaux constitutifs de garde-corps et de balustrades et analogues sont généralement assemblés entre eux par des moyens de raccordement pourvus, d'une part, d'un embout de montage dans une extrémité d'un tube formant barreau ou poteau et, d'autre part, d'une partie de support et de réception d'un tube formant lisse haute ou basse ou rampe d'escalier.

Ces moyens de raccordement connus se présentent généralement sous forme de raccords en té rigides, dans le cas de montage de lisses ou sous-lisses, ou encore sous forme d'un ensemble de pièces articulées entre-elles au moyen d'un axe de blocage en position de service l'une des pièces étant insérée dans l'extrémité du poteau ou du barreau et formant le pivot de l'autre pièce de réception et de support du tube constitutif de la rampe d'escalier ou analogue, la fixation de la pièce formant pivot dans l'extrémité correspondante du barreau ou poteau, ainsi que la fixation du tube formant rampe d'escalier ou analogue étant réalisées par l'intermédiaire de vis à tête noyée.

Ces moyens connus sont pourvus, en outre, dans la pièce formant pivot, d'un écrou rapporté d'assemblage et de serrage du poteau ou du barreau et permettent d'assurer un assemblage correct du poteau ou barreau, ainsi qu'un montage relativement efficace des lisses, sous-lisses, rampes ou analogues.

Cependant, du fait de la nécessité de rapporter un écrou dans la partie mâle coopérant avec les extrémités des barreaux ou poteaux, les dispositifs existants sont d'un prix de revient relativement élevé. En outre, dans le cas de dispositifs en deux pièces articulées, l'aspect esthétique des dispositifs obtenus est relativement discutable, l'élément d'articulation formant forcément une interruption néfaste de ce point de vue. De plus, la présence même d'une articulation nécessite un serrage adapté après mise en place des différents éléments, afin d'éviter tout jeu parasite.

On connaît également, par FR-A-2 713 723 un dispositif d'assemblage pour éléments creux de garde-corps ou analogue, qui est essentiellement constitué par une pièce de montage dans l'extrémité d'un poteau ou d'un barreau fixée dans ledit poteau ou barreau et par une pièce de support pourvue d'un berceau de réception d'un élément tubulaire formant lisse, sous-lisse, rampe ou analogue, les deux pièces étant reliées entre elles au moyen d'une articulation à rotule pouvant être bloquée en position, après réglage, par l'intermédiaire d'au moins un moyen d'assemblage. Ce mode de réalisation permet l'obtention d'un assemblage pouvant être entièrement préfabriqué et favorisant un montage rapide avec des frais d'outillage relativement réduits.

Cependant, ce dispositif d'assemblage nécessite, pour le serrage final de la pièce de montage sur la pièce de support, un démontage de la rampe ou lisse après réglage de position de cette dernière, afin d'accéder au moyen d'assemblage.

Par ailleurs, le document GB-A-2 149 047 décrit un dispositif d'assemblage entre deux éléments de section cylindrique mettant en oeuvre un goujon serré dans un perçage borgne au moyen d'une vis de pression. Ce document ne décrit que des assemblages parfaitement prédéterminés ne permettant aucun réglage angulaire du type alignement de deux pièces en prolongement ou montage de deux pièces avec possibilité de décalage angulaire réglable.

En outre, ce document ne divulgue nullement un dispositif d'assemblage permettant un réglage de position des pièces à assembler avant leur blocage définitif en position, ce sans nécessiter un démontage avant blocage de la position réglée, puis un remontage des éléments à monter entre eux.

La présente invention a pour but de pallier les inconvénients des dispositifs d'assemblage connus à ce jour en proposant un dispositif d'assemblage, en particulier pour éléments creux de garde-corps ou analogue, permettant de réaliser un montage, un réglage et un blocage rapides et aisés de ses parties constitutives.

A cet effet, le dispositif conforme à l'invention est caractérisé en ce qu'il est essentiellement constitué par une pièce de montage dans l'extrémité d'un poteau ou d'un barreau, d'une lisse, d'une sous-lisse, d'une rampe ou analogue, fixée dans ledit poteau ou barreau, et par un moyen de liaison de cette pièce de montage avec l'extrémité correspondante d'une pièce de montage correspondante ou avec un élément tubulaire formant lisse, sous-lisse, rampe ou poteau ou analogue, ladite pièce de montage et le moyen de liaison étant reliés entre-eux à la manière d'une articulation pouvant être bloquée en position, après réglage, par l'intermédiaire d'au moins un moyen d'assemblage.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe du dispositif conforme à l'invention, et
la figure 2 est une vue analogue à celle de la figure 1 d'une variante de réalisation de l'invention.

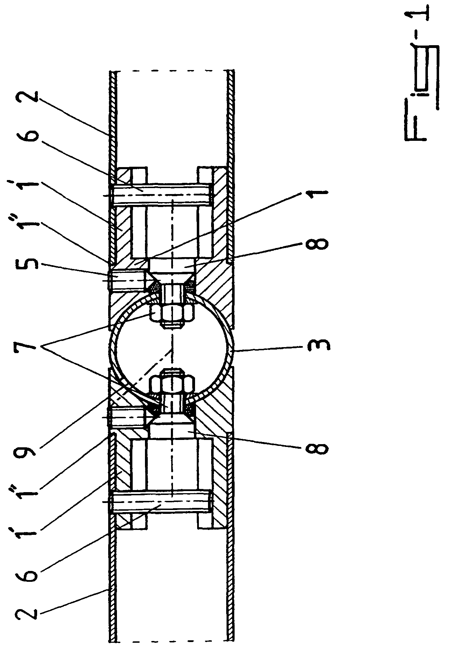

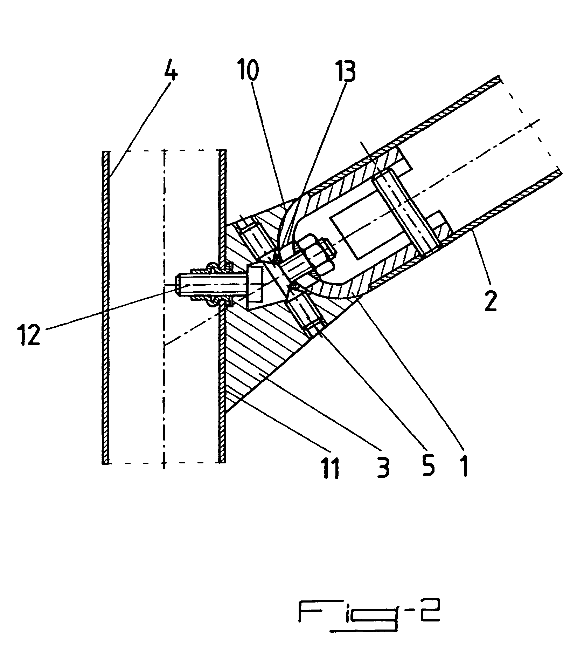

Conformément à l'invention, et comme le montrent plus particulièrement, à titre d'exemples, les figures 1 et 2 des dessins annexés, le dispositif d'assemblage, en particulier pour éléments creux de garde-corps ou analogue, est essentiellement constitué par une pièce 1 de montage dans l'extrémité d'un poteau ou d'un barreau 2, d'une lisse, d'une sous-lisse, d'une rampe ou analogue, fixée dans ledit poteau ou barreau 2 et par un moyen 3 de liaison de cette pièce de montage 1 avec l'extrémité correspondante d'une pièce de montage 1 correspondante (figure 1) ou avec un élément tubulaire 4 formant poteau ou analogue (figure 2), ladite pièce de montage 1 et le moyen de liaison 3 étant reliés entre-eux à la manière d'une articulation pouvant être bloquée en position, après réglage, par l'intermédiaire d'au moins un moyen d'assemblage 5.

Selon une caractéristique de l'invention, la pièce 1 de montage dans l'extrémité d'un poteau ou d'un barreau 2 d'une lisse, d'une sous-lisse, d'une rampe ou analogue, est avantageusement constituée sous forme d'un élément présentant une extrémité 1' emmanchable dans l'extrémité correspondante dudit poteau ou barreau 2 avec mise en butée contre ladite extrémité de ce dernier par l'intermédiaire d'un épaulement 1", le maintien de ladite pièce de montage 1 dans le poteau ou barreau 2 étant assuré par un moyen de liaison 6 traversant la paroi du poteau ou barreau 2 et serré dans l'extrémité emmanchable 1' de la pièce de montage 1. De préférence, l'extrémité emmanchable 1' de la pièce de montage 1 présente deux parties diamétralement opposées, dont l'une est traversée par le moyen liaison 6 traversant la paroi du poteau ou barreau 2 et dont l'autre forme une surface d'appui pour l'extrémité dudit moyen liaison 6.

Ce dernier est préférentiellement constitué par une vis sans tête traversant un trou de section correspondante de la paroi du poteau ou barreau 2 et coopérant avec un taraudage correspondant d'une partie de l'extrémité emmanchable 1' de la pièce de montage 1, la longueur de cette vis étant telle qu'elle soit complètement noyée à la surface externe du poteau ou barreau 2 en position de service. Ainsi, il est possible de fixer la pièce de montage 1 dans l'extrémité correspondante du poteau ou barreau 2 en assurant une esthétique parfaite, le moyen de liaison 6 restant totalement invisible.

Le moyen 3 de liaison de la pièce de montage 1 avec l'extrémité correspondante d'une pièce de montage 1 correspondante (figure 1) est avantageusement constitué, selon un premier mode de réalisation de l'invention, par un élément sphérique muni d'au moins deux boulons traversants 7, dont la tête de vis est avantageusement conique, chaque tête de vis pénétrant dans un perçage 8 de section correspondante de la pièce de montage 1 correspondante, l'extrémité libre correspondante de la pièce de montage 1 présentant une forme concave hémisphérique correspondant à celle du moyen 3. De préférence, au moins l'un des trous de traversée des vis formant les boulons 7 est un trou oblong 9. Ainsi, il est possible de réaliser une jonction bout à bout de deux barreaux 2 ou analogues, éventuellement avec un changement de direction entre les deux barreaux 2.

Conformément à une variante de réalisation de l'invention, il est également possible de réaliser le moyen 3 de liaison de la pièce 1 avec l'extrémité correspondante d'une pièce de montage 1 correspondante sous forme d'un élément tubulaire muni d'au moins deux trous de passage pour les vis formant les boulons 7, l'un de ces trous étant avantageusement oblong, ces trous pouvant être dans un même plan ou dans des plans différents, l'extrémité libre correspondante de la pièce de montage 1 présentant une forme concave semi-cylindrique correspondant à celle du moyen 3. Un tel mode de réalisation permet la mise en oeuvre d'éléments tubulaires formant poteaux de réception de barreaux, lisses ou analogues, lesdits barreaux, lisses ou analogues pouvant être reliés auxdits poteaux à des niveaux différents, par exemple en vue d'un changement de niveau du sol d'une portée à une autre.

La figure 2 des dessins annexés représente une autre variante de réalisation de l'invention, dans laquelle le moyen 3 de liaison d'une pièce de montage 1 avec un élément tubulaire 4 formant poteau ou analogue se présente sous forme d'un élément de liaison femelle-femelle, dont l'une des extrémités est munie d'un évidement hémisphérique 10 pouvant coopérer avec une extrémité hémisphérique correspondante d'une pièce de montage 1 et dont l'autre extrémité est pourvue d'une empreinte semi-cylindrique 11 permettant la coopération avec un poteau cylindrique 4 ou analogue, l'axe de l'empreinte semi-cylindrique 11 étant avantageusement situé dans un plan sécant de celui de l'évidement hémisphérique 10, différent de 90° et le boulon 7 d'assemblage étant monté sur l'extrémité de la pièce de montage 1. Dans un tel mode de réalisation, l'extrémité hémisphérique de la pièce de montage 1 est avantageusement muni d'un trou oblong de passage de la vis formant le boulon 7 d'assemblage avec le moyen de liaison 3, la fixation de ce dernier sur l'élément tubulaire 4 formant poteau ou analogue étant réalisée par l'intermédiaire d'une vis 12 ou analogue, logée dans le corps du moyen de liaison 3 et coopérant avec une cheville ou analogue prévue dans le poteau 4. Ainsi, il est possible de réaliser une liaison entre un élément formant poteau vertical 4 et un élément 2 s'étendant en oblique, par exemple de garde-corps d'escalier, l'élément oblique 2 étant lui-même susceptible d'être orienté du fait de la prévision d'un trou oblong de passage de la vis formant le boulon 7.

Le moyen 5 d'assemblage et de blocage en position, après réglage, de la pièce de montage 1 et du moyen de liaison 3, est avantageusement constitué par au moins une vis de pression à bout conique, dont ledit bout s'appuie sous la face conique de la tête de la vis formant le boulon 7 d'assemblage. Pour favoriser le montage, un écartement entre la tête de vis formant le boulon 7 d'assemblage et la portée sphérique ou cylindrique sur laquelle est monté ledit boulon 7 est assuré par prévision d'un anneau 13 en élastomère ou autre entre ladite tête et ladite portée sphérique ou cylindrique. Ainsi, il est toujours assuré un écartement suffisant entre la portée sphérique ou cylindrique et la tête de vis pour permettre un montage et un blocage aisés de la ou des vis de pression à bout conique constituant le moyen 5 d'assemblage. Dans le cas du montage selon la figure 2, l'accès au logement de la vis 12 de fixation est réalisé par passage dans le trou de réception de la tête de la vis formant le boulon 7.

Dans la description ci-dessus, les différentes liaisons étaient du type à surfaces courbes, cependant, une liaison à surfaces planes, par coopération de formes angulaires, est également envisageable avec le dispositif selon l'invention.

Grâce à l'invention il est possible de réaliser un assemblage, en particulier d'éléments creux décoratifs, dans le domaine de la ferronnerie, notamment mis en oeuvre pour l'obtention de garde-corps, de balustrades ou autres, dont les différents composants peuvent être montés séparément sur les tubes respectifs, tout en pouvant être positionnés aisément.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, qui est déterminé par la teneur des revendications.

## Revendications

1. Dispositif d'assemblage, en particulier pour éléments creux de garde-corps ou analogue, **caractérisé en ce qu'**il est essentiellement constitué par une pièce (1) de montage dans l'extrémité d'un poteau ou d'un barreau (2), d'une lisse, d'une sous-lisse, d'une rampe ou analogue, fixée dans ledit poteau ou barreau (2) et par un moyen (3) de liaison de cette pièce de montage (1) avec l'extrémité correspondante d'une pièce de montage (1) correspondante ou avec un élément tubulaire (4) formant poteau ou analogue, la pièce (1) de montage et le moyen (3) de liaison étant assemblés séparément audit poteau, barreau (2), lisse, sous-lisse, rampe ou analogue ou à l'élément tubulaire (4) formant poteau ou analogue et étant reliés entre-eux à la manière d'une articulation pouvant être bloquée en position, après réglage, par l'intermédiaire d'au moins un moyen d'assemblage (5), sans démontage, avant blocage, des éléments assemblés à la pièce (1) de montage et au moyen (3) de liaison.

2. Dispositif d'assemblage, suivant la revendication 1, **caractérisé en ce que** la pièce (1) de montage dans l'extrémité d'un poteau ou d'un barreau (2) d'une lisse, d'une sous-lisse, d'une rampe ou analogue, est constituée sous forme d'un élément présentant une extrémité (1') emmanchable dans l'extrémité correspondante dudit poteau ou barreau (2) avec mise en butée contre ladite extrémité de ce dernier par l'intermédiaire d'un épaulement (1"), le maintien de ladite pièce de montage (1) dans le poteau ou barreau (2) étant assuré par un moyen de liaison (6) traversant la paroi du poteau ou barreau (2) et serré dans l'extrémité emmanchable (1') de la pièce de montage (1).

3. Dispositif d'assemblage, suivant la revendication 2, **caractérisé en ce que** l'extrémité emmanchable (1') de la pièce de montage (1) présente deux parties diamétralement opposées, dont l'une est traversée par le moyen liaison (6) traversant la paroi du poteau ou barreau (2) et dont l'autre forme une surface d'appui pour l'extrémité dudit moyen liaison (6).

4. Dispositif d'assemblage, suivant l'une quelconque des revendications 1 et 2 ou 3, **caractérisé en ce que** le moyen liaison (6) est constitué par une vis sans tête traversant un trou de section correspondante de la paroi du poteau ou barreau (2) et coopérant avec un taraudage correspondant d'une partie de l'extrémité emmanchable (1') de la pièce de montage (1), la longueur de cette vis étant telle qu'elle soit complètement noyée à la surface externe du poteau ou barreau (2) en position de service.

5. Dispositif d'assemblage, suivant la revendication 1, **caractérisé en ce que** le moyen (3) de liaison de la pièce de montage (1) avec l'extrémité correspondante d'une pièce de montage (1) correspondante est constitué par un élément sphérique muni d'au moins deux boulons traversants (7), dont la tête de vis est avantageusement conique, chaque tête de vis pénétrant dans un perçage (8) de section correspondante de la pièce de montage (1) correspondante, l'extrémité libre correspondante de la pièce de montage (1) présentant une forme concave hémisphérique correspondant à celle du moyen (3).

6. Dispositif d'assemblage, suivant les revendications 1 et 5, **caractérisé en ce qu'**au moins l'un des trous de traversée des vis formant les boulons (7) est un trou oblong (9).

7. Dispositif d'assemblage, suivant les revendications 1 et 5, **caractérisé en ce que** le moyen (3) de liaison de la pièce 1 avec l'extrémité correspondante d'une pièce de montage (1) correspondante est sous forme d'un élément tubulaire muni d'au moins deux trous de passage pour les vis formant les boulons (7), l'un de ces trous étant oblong, ces trous pouvant être dans un même plan ou dans des plans différents, l'extrémité libre correspondante de la pièce de montage (1) présentant une forme concave semi-cylindrique correspondant à celle du moyen (3).

8. Dispositif d'assemblage, suivant les revendications 1 et 5, **caractérisé en ce que** le moyen (3) de liaison d'une pièce de montage (1) avec un élément tubulaire (4) formant poteau ou analogue se présente sous forme d'un élément de liaison femelle-femelle, dont l'une des extrémités est munie d'un évidement hémisphérique (10) pouvant coopérer avec une extrémité hémisphérique correspondante d'une pièce de montage (1) et dont l'autre extrémité est pourvue d'une empreinte semi-cylindrique (11) permettant la coopération avec un poteau cylindrique (4) ou analogue, l'axe de l'empreinte semi-cylindrique (11) étant avantageusement situé dans un plan sécant de celui de l'évidement hémisphérique (10), différent de 90° et le boulon (7) d'assemblage étant monté sur l'extrémité de la pièce de montage (1).

9. Dispositif d'assemblage, suivant la revendication 8, **caractérisé en ce que** l'extrémité hémisphérique de la pièce de montage (1) est muni d'un trou oblong de passage de la vis formant le boulon (7) d'assemblage avec le moyen de liaison (3), la fixation de ce dernier sur l'élément tubulaire (4) formant poteau ou analogue étant réalisée par l'intermédiaire d'une vis (12) ou analogue, logée dans le corps du moyen de liaison (3) et coopérant avec une cheville ou analogue prévue dans le poteau (4).

10. Dispositif d'assemblage, suivant l'une quelconque des revendications 1 et 5 à 9, **caractérisé en ce que** le moyen (5) d'assemblage et de blocage en position, après réglage, de la pièce de montage (1) et du moyen de liaison (3), est constitué par au moins une vis de pression à bout conique, dont ledit bout s'appuie sous la face conique de la tête de la vis formant le boulon (7) d'assemblage.

11. Dispositif d'assemblage, suivant l'une quelconque des revendications 1 et 5 à 10, **caractérisé en ce qu'**un écartement entre la tête de vis formant le boulon (7) d'assemblage et la portée sphérique ou cylindrique sur laquelle est monté ledit boulon (7) est assuré par prévision d'un anneau (13) en élastomère ou autre entre ladite tête et ladite portée sphérique ou cylindrique.

12. Dispositif d'assemblage, suivant la revendication 1, **caractérisé en ce que** les différentes liaisons sont du type à surfaces planes par coopération de formes angulaires.

## Patentansprüche

1. Montagevorrichtung insbesondere für Hohlteile einer Brüstung, eines Geländers oder dergleichen, **dadurch gekennzeichnet, daß** sie im wesentlichen durch ein Montagestück (1) in dem Ende eines Pfostens oder einer Stange (2), eines Balkens oder einer Pfette, einer Unterpfette, eines Treppengeländers oder dergleichen ausgebildet ist, welches Montagestück (1) in dem Pfosten oder in der Stange (2) durch eine Einrichtung (3) zum Verbinden dieses Montagestücks (1) mit dem zuzuordnenden Ende eines zuzuordnenden Montagestücks (1) oder mit einem rohrförmigen Bauteil (4) befestigt ist, das den Pfosten oder dergleichen bildet, wobei das Montagestück (1) und die Verbindungseinrichtung (3) getrennt von dem Pfosten, der Stange (2), der Pfette, der Unterpfette, des Treppengeländers oder dergleichen oder an dem rohrförmigen Bauteil (4), das den Pfosten oder dergleichen bildet, montiert sind, und miteinander in der Art eines in einer Position blockierbaren Gelenks nach einer Einstellung mit Hilfe einer Montageeinrichtung (5) ohne Demontage vor dem Blockieren der montierten Bauteile an das Montagestück (1) und an die Verbindungseinrichtung (3) verbunden sind.

2. Montagevorrichtung nach Anspruch 1, **dadurch gekennzeichnet, daß** das Montagestück (1) in dem Ende eines Pfostens oder einer Stange (2), eines Balkens oder einer Pfette, einer Unterpfette, eines Treppengeländers oder dergleichen in Form eines Bauteils mit einem Ende (1') gebildet ist, das in das entsprechende Ende des Pfostens oder der Stange (2) aufschrumpfbar ist, wobei ein Anschlag gegen das Ende der Pfostenstange mit Hilfe einer Schulter (1") gebildet ist, wobei der ortsfeste Sitz des Montagestücks (1) in dem Pfosten oder der Stange (2) durch eine Verbindungseinrichtung (6) sichergestellt ist, die die Wand des Pfostens oder der Stange (2) quert und in dem aufschrumpfbaren Ende (1') des Montagestücks (1) eingespannt ist.

3. Montagevorrichtung nach Anspruch 2, **dadurch gekennzeichnet, daß** das aufschrumpfbare Ende (1') des Montagesstücks (1) diametral gegenüberliegende Teile umfaßt, von denen ein Teil von der Verbindungseinrichtung (6), die die Wand des Pfostens oder der Stange (2) durchquert, durchquert ist und von denen der anderen Teil eine Abstützfläche für das Ende der Verbindungseinrichtung (6) bildet.

4. Montagevorrichtung nach einem der Ansprüche 1 und 2 oder 3, **dadurch gekennzeichnet, daß** die Verbindungseinrichtung (6) durch eine kopflose Schraube gebildet ist, die durch ein Loch eines entsprechenden Abschnitts der Wand des Pfostens oder der Stange (2) verläuft und mit einem Gewinde zusammenwirkt, das einem Teil des schrumpfbaren Endes (1') des Montagestücks (1) zugehörig ist, wobei die Länge dieser Schraube derart ist, daß sie vollständig bezüglich der Außenfläche des Pfostens oder der Stange (2) in der Betriebsposition versenkt ist.

5. Montagevorrichtung nach Anspruch 1, **dadurch gekennzeichnet, daß** die Verbindungseinrichtung (3) des Montagestücks (1) mit dem zuzuordnenden Ende eines zuzuordnenden Montagestücks (1) durch ein kugelförmiges Teil gebildet ist, das mit wenigstens zwei Querbolzen (7) versehen ist, dessen Schraubenkopf vorteilhafterweise konisch ist, wobei jeder Schraubenkopf durch eine Bohrung (8) eines zuzuordnenden Abschnitts des zuzuordnenden Montagestücks (1) eindringt, wobei das zuzuordnende freie Ende des Montagestücks (1) eine konkave hemisphärische Form aufweist, die der der Einrichtung (3) entspricht.

6. Montagevorrichtung nach den Ansprüchen 1 und 5, **dadurch gekennzeichnet, daß** wenigstens ein Durchgangsloch für Schrauben, die die Bolzen (7) bilden, ein Langloch (9) ist.

7. Montagevorrichtung nach den Ansprüchen 1 und 5, **dadurch gekennzeichnet, daß** die Verbindungseinrichtung (3) des Stücks (1) mit dem zuzuordnenden Ende eines zuzuordnenden Montagestücks (1) als rohrförmiges Bauteil ausgebildet ist, das mit zwei Durchgangslöchern für die Schrauben versehen ist, welche die Bolzen (7) bilden, wobei ein Loch als Langloch ausgeführt ist, wobei die Löcher in einer Ebene oder in unterschiedlichen Ebenen liegen können, wobei das entsprechende freie Ende des Montagestücks (1) eine halbzylindrische, konkave Form aufweist, die der der Einrichtung (3) entspricht.

8. Montagevorrichtung nach den Ansprüchen 1 und 5, **dadurch gekennzeichnet, daß** die Verbindungseinrichtung (3) eines Montagestücks (1) mit einem rohrförmigen Bauteil (4), das einen Pfosten oder dergleichen bildet, in Form eines Verbindungselements der weiblich-weiblichen Art ausgebildet ist, von dem ein Ende mit einer hemisphärischen Aussparung (10) versehen ist, die mit einem zuzuordnenden hemisphärischen Ende eines Montagestücks (1) zusammenwirken kann, und dessen anderes Ende eine halbzylindrische Vertiefung (11) aufweist, die ein Zusammenwirken mit dem zylindrischen Pfosten (4) oder dergleichen zuläßt, wobei die Achse der halbzylindrischen Vertiefung (11) vorteilhafterweise in einer Ebene liegt, welche die Ebene der hemisphärischen Aussparung (10) schneidet und von 90° unterschiedlich ist, wobei der Montagebolzen (7) an dem Ende des Montagestücks (1) montiert ist.

9. Montagevorrichtung nach Anspruch 8, **dadurch gekennzeichnet, daß** das hemisphärische Ende des Montagestücks (1) mit einem Durchgangslangloch für die Schraube versehen ist, die den Bolzen (7) für die Montage mit der Verbindungseinrichtung (3) bildet, wobei die Befestigung des Bolzens an dem rohrförmigen Bauteil (4), das den Pfosten oder dergleichen bildet, mit Hilfe einer Schraube (12) oder dergleichen realisiert ist, die in dem Körper der Verbindungseinrichtung (3) sitzt und mit einem Zapfen oder dergleichen zusammenwirkt, der an dem Pfosten (4) vorgesehen ist.

10. Montagevorrichtung nach den Ansprüchen 1 und 5 bis 9, **dadurch gekennzeichnet, daß** die Einrichtung (5) zur Montage und zur Positionsblockade nach dem Einstellen des Montagestücks (1) und der Verbindungseinrichtung (3) durch wenigstens eine Druckschraube mit einem konischen Ende gebildet ist, das sich an der konischen Fläche des Kopfes der Schraube abstützt, die den Montagebolzen (7) bildet.

11. Montagevorrichtung nach den Ansprüchen 1 und 5 bis 10, **dadurch gekennzeichnet, daß** ein Abstand zwischen dem Kopf der den Montagebolzen (7) bildenden Schraube und dem kugelförmigen oder zylindrischen Umfang, an dem der Bolzen (7) montiert ist, durch Vorsehen eines Ringes (13) aus einem Elastomer oder einem anderen Material zwischen dem Kopf und dem kugelförmigen oder zylindrischen Umfang festgelegt ist.

12. Montagevorrichtung nach Anspruch 1, **dadurch gekennzeichnet, daß** die verschiedenen Verbindungen der Bauart mit ebenen Flächen der Kooperation mit winkligen Formen entsprechen.

## Claims

1. Assembly device, in particular for hollow guard-rail elements or the like, **characterised in that** it substantially consists of a mounting part (1) in the end of a post or a bar (2), a rail, an under-rail, a ramp or the like, fixed in said post or bar (2), and of a means (3) for connecting this mounting part (1) to the corresponding end of a corresponding mounting part (1) or to a tubular element (4) forming the post or the like, the mounting part (1) and the connection means (3) being assembled separately on said post, bar (2), rail, under-rail, ramp or the like or on the tubular element (4) forming the post or the like, and being interconnected in the manner of a joint that is capable of being locked in position, after adjustment, by at least one assembly means (5), without disassembly, prior to locking, of the elements assembled on the mounting part (1) and on the connection means (3).

2. Assembly device according to claim 1, **characterised in that** the mounting part (1) in the end of a post or a bar (2), a rail, an under-rail, a ramp or the like is in the form of an element having an end (1') that can be engaged in the corresponding end of said post or bar (2) while abutting against said end of said post or bar via a shoulder (1"), said mounting part (1) being held in the post or bar (2) by a connection means (6) passing through the wall of the post or bar (2) and gripped in the engageable end (1') of the mounting part (1).

3. Assembly device according to claim 2, **characterised in that** the engageable end (1') of the mounting part (1) has two diametrically opposed portions, one of which is passed through by the connection means (6) passing through the wall of the post or bar (2) and the other of which forms a support surface for the end of said connection means (6).

4. Assembly device according to any one of claims 1 and 2 or 3, **characterised in that** the connection means (6) consists of a headless screw passing through a hole of corresponding cross-section in the wall of the post or bar (2), and cooperating with a corresponding internal thread of a portion of the engageable end (1') of the mounting part (1), the length of this screw being such that it is completely embedded in the external surface of the post or bar (2) in the service position.

5. Assembly device according to claim 1, **characterised in that** the means (3) for connecting the mounting part (1) to the corresponding end of a corresponding mounting part (1) consists of a spherical element provided with at least two through-bolts (7), the screw heads of which are advantageously conical, each screw head penetrating a perforation (8) of corresponding cross-section in the corresponding mounting part (1), the corresponding free end of the mounting part (1) having a hemispherical concave shape corresponding to that of the means (3).

6. Assembly device according to claims 1 and 5, **characterised in that** at least one of the holes passed through by the screws forming the bolts (7) is an oblong hole (9).

7. Assembly device according to claims 1 and 5, **characterised in that** the means (3) for connecting the part (1) to the corresponding end of a corresponding mounting part (1) is in the form of a tubular element provided with at least two passage holes for the screws forming the bolts (7), one of these holes being oblong, wherein these holes may be in the same plane or in different planes, the corresponding free end of the mounting part (1) having a semi-cylindrical concave shape corresponding to that of the means (3).

8. Assembly device according to claims 1 and 5, **characterised in that** the means (3) for connecting a mounting part (1) to a tubular element (4) forming the post or the like is in the form of a female/female connection element, one of the ends of which is provided with a hemispherical recess (10) capable of cooperating with a corresponding hemispherical end of a mounting part (1) and the other end of which is provided with a semi-cylindrical indentation (11) allowing cooperation with a cylindrical post (4) or the like, the axis of the semi-cylindrical indentation (11) advantageously being arranged in a plane intersecting that of the hemispherical recess (10), differing by 90°, and the assembly bolt (7) being mounted on the end of the mounting part (1).

9. Assembly device according to claim 8, **characterised in that** the hemispherical end of the mounting part (1) is provided with an oblong hole for passage of the screw forming the bolt (7) for assembly on the connection means (3), said connection means being fixed onto the tubular element (4) forming the post or the like by a screw (12) or the like, accommodated in the body of the connection means (3) and cooperating with a dowel or the like provided in the post (4).

10. Assembly device according to any one of claims 1 and 5 to 9, **characterised in that** the means (5) for assembly and locking in position of the mounting part (1) and the connection means (3), after adjustment, consists of at least one locking screw having a conical end, said end of which rests under the conical face of the head of the screw forming the assembly bolt (7).

11. Assembly device according to any one of claims 1 and 5 to 10, **characterised in that** a gap between the screw head forming the assembly bolt (7) and the spherical or cylindrical support on which said bolt (7) is mounted is formed by the provision of a ring (13) made of elastomer or the like between said head and said spherical or cylindrical support.

12. Assembly device according to claim 1, **characterised in that** the various connections are of the type exhibiting surfaces which are rendered planar by cooperation of angular shapes.
